Europäisches Patentamt

European Patent Office

Office européen des brevets

(19)

(11) Veröffentlichungsnummer: **0 316 498 B1**

(12) # EUROPÄISCHE PATENTSCHRIFT

(45) Veröffentlichungstag der Patentschrift: **04.03.92**

(51) Int. Cl.⁵: **G01P 15/09**

(21) Anmeldenummer: **87810642.6**

(22) Anmeldetag: **09.11.87**

(54) **Accelerometer.**

(43) Veröffentlichungstag der Anmeldung:
**24.05.89 Patentblatt 89/21**

(45) Bekanntmachung des Hinweises auf die
Patenterteilung:
**04.03.92 Patentblatt 92/10**

(84) Benannte Vertragsstaaten:
**CH DE FR GB IT LI**

(56) Entgegenhaltungen:
**DE-B- 2 906 451      FR-A- 2 172 802**
**GB-A- 836 194      GB-A- 1 601 547**
**GB-A- 2 114 301      US-A- 4 085 349**
**US-A- 4 430 895**

(73) Patentinhaber: **VIBRO-METER SA**
**Route de Moncor 4**
**CH-1700 Fribourg(CH)**

(72) Erfinder: **Schmid, Felix**
**24, Rte du Bugnon**
**CH-1752 Villars-Sur-Glâne(CH)**

(74) Vertreter: **Steiner, Martin et al**
**c/o AMMANN PATENTANWÄLTE AG BERN**
**Schwarztorstrasse 31**
**CH-3001 Bern(CH)**

## Beschreibung

Die vorliegende Erfindung betrifft ein Accelerometer gemäss Oberbegriff des Anspruchs 1 oder 2. Ein derartiges Accelerometer ist bekannt aus der GB-A-1 601 547. Das piezoelektrische Wandlerelement ist dabei in eine Vergussmasse eingebettet in einem Gehäuse angeordnet. Die zu erfassenden Kräfte bzw. Kräfteunterschiede wirken daher nur über eine Verformung des Gehäuses und der Vergussmasse auf das Wandlerelement, was zu Verzerrungen bzw. Alinearitäten und zu einer geringen Empfindlichkeit führt. Der Aufbau bzw. die Herstellung des Accelerometers ist aufwendig.

Aufgabe vorliegender Erfindung ist es, ein Accelerometer zu schaffen, das bei einfachem Aufbau hohe Linearität und Empfindlichkeit der Messung gewährleistet. Eine erste Lösung ist im Kennzeichen des Anspruchs 1 angegeben. Die seismische Masse wirkt hierbei mit Hebelwirkung direkt auf das Wandlerelement wodurch eine hohe Empfindlichkeit und Linearität erzielt wird. Der Aufbau ist einfach, unter anderem dank der einteiligen Elektroden.

Eine weitere Lösung ist im Kennzeichen des Anspruchs 2 beschrieben. Bei gleichem mechanischem Aufbau kann hierbei auf besonders einfache Weise eine Empfindlichkeit bzw. Messung in zwei Koordinatenrichtungen und damit die Erfassung der Richtung und Grösse von Beschleunigungen erreicht werden.

Die Erfindung wird nun anhand der Zeichnung näher erläutert.

Fig. 1   zeigt einen Schnitt durch die erste Ausführungsform,

Fig. 2   ist eine perspektivische Ansicht des elektromechanischen Wandlers der Ausführung nach Fig. 1,

Fig. 3   zeigt ein Wandlerelement mit besonderer Polarisation,

Fig. 4   zeigt eine zweite Ausführungsform mit einem Wandlerelement gemäss Fig. 3 und

Fig. 5   ist eine auseinandergezogene Darstellung einer weiteren Ausführungsform des Wandlers.

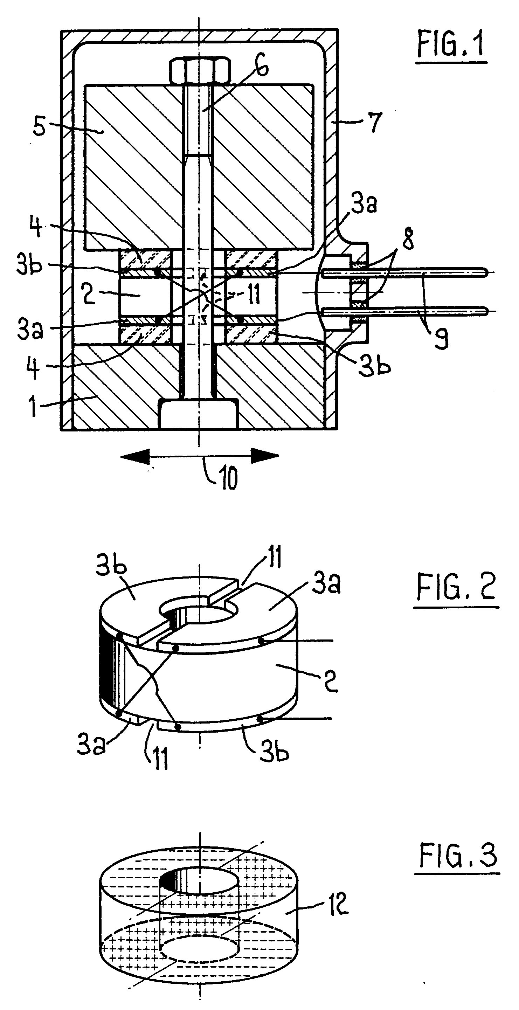

Das in Fig. 1 dargestellte Accelerometer weist eine Montagebasis 1 und ein piezoelektrisches Wandlerelement 2 mit je zwei etwa halbkreisförmigen Elektrodenpaaren 3a und 3b (Fig. 2) auf. Der aus dem Wandlerelement 2 und den Elektroden 3 bestehende Wandler wird beidseitig umfasst von Isolationsscheiben 4. Die seismische Masse 5 ist mittels eines Bolzens 6 mit der Montagebasis 1 verschraubt und wird mit einer solchen Vorspannung gegen den Wandler gepresst, dass die Teile unter allen Betriebszuständen und in jeder möglichen Orientierung des Accelerometers unter Vorspannung stehen und unverrückbar zusammengehalten werden. Durch ein Gehäuse 7 werden die aktiven Teile mechanisch geschützt und hermetisch abgeschlossen. In der Gehäusewand sind hermetische Durchführungen 8 für Anschlussstifte 9 vorgesehen. Wie angedeutet, sind die beiden Anschlussstifte 9 mit benachbarten Elektroden 3a und 3b verbunden, die ihrerseits über Kreuz mit den entsprechenden zentralsmetrisch dazu liegenden Elektroden 3a bzw. 3b verbunden sind. In der Montagebasis 1 befinden sich nicht dargestellte Befestigungslöcher zur Montage des Accelerometers.

In Fig. 1 ist durch den Pfeil 10 die Empfindlichkeitsachse des Accelerometers angedeutet. Bezogen auf Fig. 2 liegt diese Achse parallel zu den Ebenen der Elektroden und senkrecht zur Richtung der Fugen 11 zwischen je zwei benachbarten halbringförmigen Elektroden 3a und 3b. Treten in dieser Empfindlichkeitsachse Beschleunigungen auf, erzeugen die Massenträgheitskräfte der seismischen Masse 5 Biegebeanspruchungen, welche sich in entgegengesetzten Aenderungen der Druckkräfte in den links, bzw. rechts, in Fig. 1 oder Fig. 2 dargestellten Wandlerteilen auswirken. Es wird also beispielsweise in dem rechts liegenden mit einem Elektrodenpaar 3a und 3b besetzten Teil des Wandlers eine Druckzunahme und in dem links liegenden Teil eine Druckabnahme erfolgen. Es werden damit Spannungsänderungen an den betreffenden Elektrodenpaaren auftreten, die entgegengesetzt gerichtet sind. Mit anderen Worten treten Aenderungen der Drücke und der Spannungen im Gegentakt auf. Da nun die Elektroden der rechten und linken Wandlerhälfte über Kreuz, bzw. im Gegentakt, geschaltet sind, wirken sich die entgegengesetzten Spannungsänderungen in den beiden Elektrodenpaaren gleichsinnig an den Anschlüssen 9 aus, d.h. es erfolgt eine Summierung der erzeugten Ladungsänderungen. Aeussere Einflüsse, die sich auf gegenüberliegende Elektroden praktisch gleich auswirken, werden jedoch durch die Gegentaktanordnung und -schaltung je zweier Elektrodenhälften vollständig oder weitgehend kompensiert. Es wird also ohne Einbusse an grundsätzlicher Empfindlichkeit des Wandlers eine erhebliche Herabsetzung störender Einflüsse erreicht.

Insbesondere bei relativ schlanken Konstruktionen des Accelerometers ist die Ladungsausbeute bei gleichen geometrischen Abmessungen günstiger als bei bekannten ausführungsformen, da die Biegespannungen mit zunehmender Länge rasch ansteigen. Wie sich aus dem vorstehenden ohne weiteres ergibt, gestattet die Ausnützung von Biegespannungen in einfachster Weise die Beanspruchung des Wandlers im Gegentakt, so dass ein übliches Wandlerelement lediglich mit einer besonderen Elektrodenanordnung versehen sein muss, um die erwähnten Vorteile zu erzielen. Es ist zudem möglich, die Empfindlichkeit bei gleichbleibenden Abmessungen der seismischen Masse zu erhöhen, indem die Querschnittsfläche der Wandlerelemente verkleinert wird. Auf die elektrische und geometrische Symmetrie des Wandlers und auf die sich daraus ergebenden Vorteile ist bereits hingewiesen worden. Man wird dabei nicht nur unabhängig von äusseren störenden Einflüssen, sonderen auch unerwünschte Ladungen wie sie durch den pyroelektrischen Effekt bei Temperaturänderungen entstehen, werden kompensiert. Mechanische Beanspruchungen, die durch Dehnung der Montagebasis und/oder des Gehäuses verursacht werden (sogenannte "Basestrain"- und "Casestrain"-Effekte), werden weitgehend unwirksam, da die auftretenden Dehnungen in der Montagebasis oder im Gehäuse sich etwa gleich auf die beiden Hälften des Wandlers auswirken, so dass sich die erzeugten Ladungen gegenseitig aufheben.

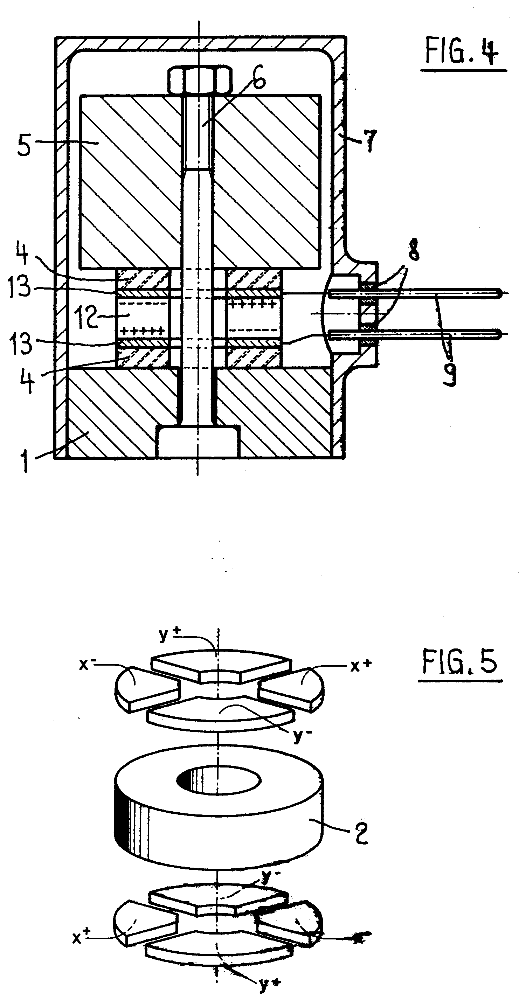

Die Figuren 3 und 4 zeigen eine weitere Ausführungsform. Entsprechende Teile sind gleich bezeichnet, wie in den Figuren 1 und 2. Der wesentliche Unterschied besteht lediglich in der Ausbildung des elektromechanischen Wandlers. Gemäss Fig. 3 weist er ein ringförmiges Wandlerelement 12 aus Piezokeramik auf. Derartige Keramiken werden im Gegensatz zu Piezokristallen durch Anlegen eines starken elektrischen Feldes unter gewissen Temperaturbedingungen polarisiert, was die Möglichkeit bietet, verschiedene Zonen des Elementes in unterschiedlichen Richtungen zu polarisieren. Im Falle der Ausführungsform nach Figuren 3 und 4 werden nun je zwei Hälften des ringförmigen Wandlerelementes 12 in entgegengesetzter Richtung polarisiert, wie in Fig. 3 angedeutet. Die entsprechenden Polarisationen sind auch in Fig. 4 im eingebauten Element angedeutet. Im neutralen Zustand, d.h. wenn beide entgegengesetzt polarisierten Hälften des Wandlerelementes unter gleichen Druckkräften stehen, erscheinen an der Oberseite und Unterseite des Elementes insgesamt gleiche und sich kompensierende Ladungen. Der Wandler ist in diesem Falle mit zwei vollen ringförmigen Elektroden 13 belegt, so dass sich im neutralen Zustand die Ladungen in diesen Elektroden aufheben. Wirken jedoch in den beiden Hälften des Wandlers, infolge Trägheitsmassenkräften der seismischen Masse 5, unterschiedliche Druckkräfte, treten Ladungsänderungen auf, die sich addieren und an den Anschlüssen 9 summiert auswirken. Wenn also beispielsweise auf der rechten Seite in Fig. 4 der Druck zunimmt, werden sich die positiven Ladungen an der oberen Elektrode und die negativen Ladungen an der unteren Elektrode erhöhen. Zugleich werden sich in der linken Hälfte des Wandlers die positiven Ladungen unten und die negativen Ladungen oben verringern. Es ergibt sich also dadurch eine Summierung der Ladungsänderungen. Bei unerwünschten Fremdeinflüssen ergeben sich jedoch wiederum mindestens teilweise die oben erwähnten Kompensationen. Die Ausführung nach Figuren 3 und 4 weist den erheblichen Vorteil einer besonders einfachen Elektrodenanordnung auf.

In Fig. 5 ist eine weitere Ausführungsmöglichkeit des Wandlerelementes angedeutet. Es handelt sich um ein im ganzen Körper gleichmässig polarisiertes Wandlerelement 2 gemäss Figuren 1 und 2. Auf diesem Wandlerelement werden nun jedoch nicht je zwei etwa halbringförmige Elektrodenpaare, sondern vier Paare von je einen Kreisringsektor von etwa $90°$ aufweisenden Elektroden angeordnet. Je paarweise am Wandlerelement 2 gegenüberliegende Elektroden sind zwei senkrecht stehenden Empfindlichkeitsachsen entsprechend mit $x^+$, $x^-$, $y^+$ und $y^-$ bezeichnet. Gemäss Fig. 1 und 2 sind je zwei zentralsymmetrisch gegenüberliegende, gleich bezeichnete Elektroden über Kreuz oder in Gegentaktanordnung zusammengeschaltet und an einen Ausgang geführt. Es ergibt sich damit ein biaxiales Accelerometer zur Erfassung von Beschleunigungskomponenten in zwei senkrecht zueinander stehenden Richtungen x, y. Bei dieser Anordnung ist der relative Empfindlichkeitsunterschied zwischen den beiden Achsen nur durch die Genauigkeit der Elektrodengeometrie gegeben, wenn vorausgesetzt wird, dass die örtliche Empfindlichkeitsverteilung innerhalb der verwendeten piezoelektrischen Scheibe konstant sei. Dies ist ein bedeutender Vorteil gegenüber Konstruktionen, welche pro Achse verschiedene Wandlerelemente benützen, da die verschiedenen Elemente meist auch unterschiedliche Empfindlichkeiten aufweisen. Piezoelektrische Accelerometer werden entsprechend bekannter Technik durch Abtragen von Material an der seismischen Masse auf eine bestimmte Empfindlichkeit justiert. Um beide Achsen in eine bestimmte, möglichst gleiche Beschleunigungsempfindlichkeit zu bringen, muss der relative Empfindlichkeitsunterschied zwischen beiden Achsen möglichst gering sein, was im vorliegenden Fall auf einfachste Weise bewerkstelligt ist.

Es ist möglich, beispielsweise bei der Ausführung nach Fig. 1, alle Elektroden separat herauszuführen und die Anschlüsse umschaltbar mit einer Messschaltung zu verbinden. Bei der dargestellten Schaltungsart würden in der beschriebenen Weise Biegebeanspruchungen erfasst. Würden dagegen je die beiden unteren und die beiden oberen Elektroden in der üblichen Weise zusammengeschaltet, könnten Unterschiede in der reinen Druckbeanspruchung, d.h. Beschleunigungskomponenten in Achsrichtung des Bolzens 6 erfasst werden. Der Einfachheithalber ist immer nur ein Wandlerelement mit seinen Elektroden dargestellt. Es könnten jedoch auch in an sich bekannter Weise mehrere gleichartige scheibenförmige Wandlerelemente übereinandergestapelt und je entsprechend mit den gemeinsamen Ausgängen 9 verbunden sein.

## Patentansprüche

1. Accelerometer mit einer seismischen Masse (5) und einem einteiligen scheibenförmigen piezoelektrischen Wandlerelement (12), wobei die bei den zu messenden Beschleunigungen auftretenden Massenträgheitskräfte in Biegebeanspruchungen umgesetzt werden, derart, dass entgegengesetzte Kraftänderungen an Teilen des Wandlerelementes auftreten, und wobei am Wandlerelement angebrachte Elektroden (13) so geschaltet sind, dass unter den Kraftänderungen auftretende Signale addiert werden, dadurch gekennzeichnet, dass das scheibenförmige Wandlerelement (12), eine Montagebasis (1) und die seismische Masse (5) mittels eines Bolzens (6) unter Vorspannung des Wandlerelementes (12) verbunden sind, wobei die Anordnung aus seismischer Masse (5), Wandlerelement (12) und Bolzen (6) eine Symmetrieachse besitzt zu der die Polarisierung des Wandlerelementes parallel ist, dass axialsymmetrisch gegenüberliegende Teile des Wandlerelementes (13) entgegengesetzt axial polarisiert sind, und dass die axial gegenüberliegenden Flächen des Wandlerelementes mit einteiligen Elektroden (13) bedeckt sind, welche mit Ausgängen (9) verbunden sind und in welchen unter den entgegengesetzt wirkenden Kraftänderungen in den entgegengesetzt polarisierten Teilen des Wandlerelementes (13) gleichgerichtete Signaländerungen induziert werden (Fig. 4).

2. Accelerometer mit einer seismischen Masse (5) und einem einteiligen scheibenförmigen piezoelektrischen Wandlerelement (2), wobei die bei den zu messenden Beschleunigungen auftretenden Massenträgheitskräfte in Biegebeanspruchungen umgesetzt werden, derart, dass entgegengesetzte Kraftänderungen an Teilen des Wandlerelementes auftreten, und wobei am Wandlerelement angebrachte Elektroden (x,y) so geschaltet sind, dass unter den Kraftänderungen auftretende Signale addiert werden, dadurch gekennzeichnet, dass das scheibenförmige Wandlerelement (2), eine Montagebasis (1) und die seismische Masse (5) mittels eines Bolzens (6) unter Vorspannung des Wandlerelementes (2) verbunden sind, wobei die Anordnung aus seismischer Masse (5), Wandlerelement (2) und Bolzen (6) eine Symmetrieachse besitzt zu der die Polarisierung des Wandlerelementes parallel ist, dass das Wandlerelement (2) gleichmässig axial polarisiert ist, und dass die axial gegenüberliegenden Flächen des Wandlerelementes mit zwei oder vier Elektrodenpaaren (3a, 3b bzw. $x^+$, $x^-$, $y^+$, $y^-$) besetzt sind, wobei die Elektroden je eines Paares zentralsymmetrisch gegenüberliegen und miteinander und mit einem Ausgang elektrisch verbunden sind, wobei im Gegentakt ändernde Signale bei Beschleunigung in einer Richtung (10) bzw. in zwei Koordinatenrichtungen (x,y) auftreten.

3. Accelerometer nach Anspruch 1 oder 2, dadurch gekennzeichnet, dass die Wandlerelemente (2,12) kreisringförmige Scheiben sind.

4. Accelerometer nach Anspruch 1 oder 2, dadurch gekennzeichnet, dass mehrere Wandlerelemente (2,12) übereinander angeordnet sind.

5. Accelerometer nach Anspruch 2, dadurch gekennzeichnet, dass Elektroden (x,y) des Wandlerelementes (2) umschaltbar mit einer Messschaltung verbunden sind, derart, dass Beschleunigungen in verschiedenen Richtungen (x,y) wahlweise erfasst werden können.

## Claims

1. An accelerometer comprising a seismic mass (5) and a disk-shaped piezoelectric transducer element (12) in one piece, wherein the mass inertia forces resulting from the accelerations to be measured are transformed into bending stresses in such a manner that parts of the transducer element are subject to opposed force variations, and wherein electrodes (13) which are attached to the transducer element are connected in such a manner that signals appearing under said force variations are added to each other, characterized in that said disk-shaped transducer element (12), a mounting base (1), and said seismic mass (5) are connected by means of a bolt (6) under prestress of the transducer element (12), the arrangement formed of the seismic mass (5), the transducer element (12) and said bolt (6) having an axis of symmetry to which the polarization of the transducer element is parallel, that axisymmetrically opposed parts of the transducer element (13) are axially inversely polarized, and that the axially opposite surfaces of the transducer element are covered with electrodes (13) in a single piece which are connected to outputs (9) and wherein under said force variations in opposed directions in the inversely polarized parts of the transducer element, signal variations acting in the same direction are induced (Fig. 4).

2. An accelerometer comprising a seismic mass (5) and a disk-shaped piezoelectric transducer element (2) in one piece, wherein the mass inertia forces resulting from the accelerations to be measured are transformed into bending stresses in such a manner that parts of the transducer element are subject to opposed force variations, and wherein electrodes (x,y) which are attached to the transducer element are connected in such a manner that signals appearing under said force variations are added to each other, characterized in that said disk-shaped transducer element (2), a mounting base (1), and said seismic mass (5) are connected by means of a bolt (6) under prestress of the transducer element (2), the arrangement formed of the seismic mass (5), the transducer element (2) and said bolt (6) having an axis of symmetry to which the polarization of the transducer element is parallel, that said transducer element (2) is axially uniformly polarized, and that the axially opposite surfaces of the transducer element are provided with two or four pairs of electrodes (3a,3b, or $x^+$, $x^-$, $y^+$, $y^-$, respectively), the electrodes of each pair facing each other central-symmetrically and being electrically connected to each other and to an output, whereby signals varying in push-pull appear under an acceleration in one direction (10) or in two coordinate directions (x,y), respectively.

3. An accelerometer according to claim 1 or 2, characterized in that said transducer elements (2,12) are disks in the form of circular rings.

4. An accelerometer according to claim 1 or 2, characterized in that a plurality of transducer elements (2,12) are superimposed upon each other.

5. An accelerometer according to claim 2, characterized in that electrodes (x,y) of the transducer element (2) are switchably connected to a measuring circuit in such a manner that accelerations in different directions (x,y) can be selectively detected.

**Revendications**

1. Accéléromètre comprenant une masse sismique (5) et un élément transducteur (12) en forme de disque et en une pièce, les forces d'inertie de masse résultant des accélérations à mesurer étant transformées en sollicitations de flexion de telle manière que des parties dudit élément transducteur sont soumises à des variations de force opposées, et des électrodes (13) attachées à l'élément transducteur étant connectées de sorte que les signaux apparaissant sous lesdites variations de force soient additionnés, caractérisé en ce que l'élément transducteur (12) en forme de disque, une base de montage (1) et ladite masse sismique sont connectés au moyen d'un boulon (6) sous précontrainte de l'élément transducteur (12), l'ensemble de la masse sismique (5), de l'élément transducteur (12) et du boulon (6) possédant un axe de symétrie auquel la polarisation de l'élément transducteur est parallèle, que les parties de l'élément transducteur (13) qui sont opposées en symétrie axiale sont axialement inversément polarisées, et que les surfaces axialement opposées de l'élément transducteur sont couvertes d'électrodes (13) en une seule pièce qui sont connectées à des sorties (9) et dans lesquelles sont induites, sous les variations de force en directions opposés dans les parties inversément polarisées de l'élément transducteur (13), des variations du signal dans la même direction (Fig. 4).

2. Accéléromètre comprenant une masse sismique (5) et un élément transducteur (2) en forme de disque et en une pièce, les forces d'inertie de masse résultant des accélérations à mesurer étant transformées en sollicitations de flexion de telle manière que des parties dudit élément transducteur sont soumises à des variations de force opposées, et des électrodes (x,y) attachées à l'élément transducteur étant connectées de sorte que les signaux apparaissant sous lesdites variations de forces soient additionnés, caractérisé en ce que l'élément transducteur (2) en forme de disque, une base de montage (1) et ladite masse sismique sont connectés au moyen d'un boulon (6) sous précontrainte de l'élément transducteur (2), l'ensemble de la masse sismique (5), de l'élément transducteur (2) et du boulon (6) possédant un axe de symétrie auquel la polarisation de l'élément transducteur est parallèle, que l'élément transducteur (2) est uniformément polarisé axialement, et que les surfaces axialement opposées de l'élément transducteur sont munies de deux ou quatre paires d'électrodes (3a,3b, respectivement $x^+$, $x^-$, $y^+$, $y^-$), les électrodes d'une paire se faisant chaque fois face en symétrie centrale et étant électriquement connectées l'une à l'autre et à une sortie, des signaux inverses apparaissant lors d'une accélération dans une direction (10) ou dans deux directions coordonnées (x,y).

3. Accéléromètre selon la revendication 1 ou 2, caractérisé en ce que les éléments transducteurs (2,12) sont des disques en forme d'anneaux circulaires.

4. Accéléromètre selon la revendication 1 ou 2, caractérisé en ce qu'une pluralité d'éléments transducteurs (2,12) sont superposés.

5. Accéléromètre selon la revendication 2, caractérisé en ce que des électrodes (x,y) de l'élément transducteur (2) sont connectées de manière commutable à un circuit de mesure, de sorte que des accélérations dans différentes directions (x,y) puissent être détectées sélectivement.

FIG.1

FIG.2

FIG.3

FIG. 4

FIG. 5